# EUROPÄISCHE PATENTSCHRIFT

(11) **EP 1 637 773 B1**
(45) Veröffentlichungstag und Bekanntmachung des Hinweises auf die Patenterteilung: **02.07.2008**
(21) Anmeldenummer: 05018114.8
(22) Anmeldetag: 19.08.2005
(51) Int. Cl.: F16H 25/22

(54) **Stelleinrichtung zur Positionierung einer Last**
Actuating device to position a load
Actuateur pour positioner de la charge

(30) Priorität: 17.09.2004 AT 15652004
(43) Veröffentlichungstag der Anmeldung: 22.03.2006
(73) Patentinhaber: Zimmermann, Jürgen, 6900 Bregenz (AT)
(72) Erfinder: Zimmermann, Jürgen, 6900 Bregenz (AT)
(74) Vertreter: Hofmann, Ralf U.

(56) Entgegenhaltungen:
- DE-A1- 2 602 185
- US-A- 3 858 458

## Beschreibung

Die Erfindung betrifft eine Stelleinrichtung zur Positionierung einer Last, mit einer Spindel, die ein Kugelgewinde aufweist, und einer Kugelgewindemutter, die mit dem Kugelgewinde der Spindel über zwischengelagerte Kugeln zusammenwirkt und die drehbar und achsial unverschiebbar in einem Gehäuse angeordnet ist und durch deren Drehung die Spindel achsial verstellbar ist, und mit einem drehbar im Gehäuse gelagerten Antriebsrad, durch dessen Drehung die Kugelgewindemutter drehbar ist, wobei die Kugelgewindemutter zwischen einem vom Antriebsrad angetriebenen Rad, welches drehfest mit der Kugelgewindemutter verbunden ist und konzentrisch zur Längsachse der Spindel drehbar im Gehäuse angeordnet ist, und einem Gegenstück liegt, welches konzentrisch zur Längsachse der Spindel drehbar im Gehäuse angeordnet ist, und wobei ein Hülsenfortsatz des angetriebenen Rades und/oder des Gegenstücks, welcher einstückig mit dem angetriebenen Rad bzw. Gegenstück ausgebildet oder drehfest mit dem angetriebenen Rad bzw. Gegenstück verbunden ist, sich in achsialer Richtung der Spindel erstreckt und die Kugelgewindemutter umgibt.

Eine Einrichtung der eingangs genannten Art ist aus der gattungsgemäßen DE 26 02 185 A1 bekannt. Sie wird dort als Schneckengetriebe bezeichnet. Eine Zahnrad-Mutteranordnung ist mittels ringförmiger Lageranordnungen drehbar innerhalb einer abgedichteten, in einem Gehäuse angeordneten Kammer gelagert. Eine Kugelmutter, durch deren Bohrung sich ein Schraubenkörper mit einer schraubenförmig verlaufenden Nut erstreckt und die von Lager-Haltekörpern in der Schraubenkörper-Längsachse unverschieblich gehalten wird und einem rohrförmigen Schutzkörper umgeben ist, ist mit Hilfe eines Schneckenteils einer Antriebswelle über ein Zahnrad, in eine Ausnehmung dessen ein Ende der Kugelmutter eingeführt ist, in Drehung versetzbar. Die Drehung der Kugelmutter löst also eine axiale Bewegung des Schraubenkörpers aus. Die abgedichtete, aus ringförmigen Lippendichtungen und dem rohrförmigen Schutzkörper gebildete Kammer, in der die Zahnrad-Mutteranordnung angeordnet ist, ist teilweise oder vollständig mit einem Schmiermittel gefüllt.

Stelleinrichtungen zur Positionierung einer Last, mit einer Spindel, die ein Kugelgewinde aufweist, und einer Kugelgewindemutter, die mit dem Kugelgewinde der Spindel über zwischengelagerte Kugeln zusammenwirkt und die drehbar und achsial unverschiebbar in einem Gehäuse angeordnet ist und durch deren Drehung die Spindel achsial verstellbar ist, und mit einem drehbar im Gehäuse gelagerten Antriebsrad, durch dessen Drehung die Kugelgewindemutter drehbar ist, werden auch als Spindelhubgetriebe oder Spindelmuttergetriebe bezeichnet. Bei einer Stelleinrichtung der eingangs genannten Art erfolgt die achsiale Verstellung der Spindel über einen von der Spindel und der Kugelgewindemutter gebildeten Kugeltrieb, wobei die Kugelgewindemutter gedreht wird und die Spindel gegen eine Verdrehung gesichert ist. Neben Spindelhubgetrieben, bei denen die Spindel durch Drehung der Mutter achsial verstellt wird, sind auch nicht gattungsgemäße Spindelhubgetriebe bekannt, bei welchen die Spindel gedreht wird und hierbei die auf der Spindel angeordnete Mutter in achsialer Richtung der Spindel verstellt wird. Bei dieser nicht gattungsgemäßen Art eines Spindelhubgetriebes ist es bekannt, am äußeren Umfang der Mutter einen Schmiernippel anzubringen, durch den ein Schmiermittel eingebracht wird, welches durch eine radiale Bohrung der Mutter in den zwischen der Mutter und der Spindel liegenden Bereich gelangt und die in diesem Bereich angeordneten Kugeln schmiert. Bei einem Spindelhubgetriebe der eingangs genannten Art ist eine in dieser Weise ausgebildete Schmierung dagegen nicht möglich.

Bei bekannten Spindelhubgetrieben, bei welchen die Spindel ein Kugelgewinde aufweist, wird zusammen mit der Kugelgewindemutter ein Kugeltrieb ausgebildet wird, sind bekannt. Daneben sind auch nicht gattungsgemäße Spindelhubgetriebe bekannt, bei welchen die Spindel mit einem Trapezgewinde ausgebildet ist.

Aufgabe der Erfindung ist es, eine Stelleinrichtung der eingangs genannten Art bereitzustellen, bei der eine vorteilhafte Schmierung des von der Spindel und der Kugelgewindemutter gebildeten Kugeltriebs ermöglicht wird. Erfindungsgemäß gelingt dies durch eine Stelleinrichtung mit den Merkmalen des Anspruchs 1.

Durch die erfindungsgemäße Ausbildung gelingt es eine abgedichtete Fettkammer bereitzustellen, in die ein Schmiermittel eingebracht werden kann, welches durch die Radialbohrung in der Kugelgewindemutter in den Bereich zwischen der Kugelgewindemutter und der Spindel gelangt und hierbei die im Inneren der Kugelgewindemutter angeordneten Kugeln schmiert. Die Lebensdauer des Kugeltriebs wird dadurch wesentlich verlängert, sodass die Wartungs- bzw. Reparaturintervalle der Stelleinrichtung insgesamt bedeutend verlängert werden können.

Kugelgewindemuttern, deren Herstellung aufwendig und anspruchsvoll ist, werden in speziell eingerichteten Herstellungsbetrieben in Großserie gefertigt und sind dadurch kostengünstig beziehbar. Eine Herstellung von Kugelgewindemuttern, welche vom Standardprodukt abweichende Geometrien aufweisen, in einer Kleinserie wäre dagegen nicht wirtschaftlich durchführbar. Vorteilhafterweise kann bei der Erfindung eine kommerziell erhältliche Standard-Kugelgewindemutter eingesetzt werden, an der zum Einsatz in einer erfindungsgemäßen Einrichtung gegebenenfalls noch Nachbearbeitungen durchgeführt werden, beispielsweise eine Radialbohrung eingebracht wird.

Weitere Vorteile und Einzelheiten der Erfindung werden im Folgenden anhand der beiliegenden Zeichnung erläutert. In dieser zeigen:
- Fig. 1: eine Schrägsicht eines Ausführungsbeispiels einer erfindungsgemäßen Stelleinrichtung, wobei der aus dem Gehäuse herausragende Teil der Spindel abgeschnitten ist und das Gewinde der Spindel nicht dargestellt ist;
- Fig. 2: einen Längsmittelschnitt der Stelleinrichtung durch die Längsachse der Spindel, wobei die Kugelgewindemutter in Seitenansicht dargestellt ist;
- Fig. 3: ein Detail E von Fig. 2;
- Fig. 4: einen Längsmittelschnitt entsprechend Fig. 2, wobei auch die Kugelgewindemutter schematisch im Schnitt dargestellt ist und ein Teil der zwischengelagerten Kugeln angedeutet sind, Schnittlinie DD von Fig. 5;
- Fig. 5: einen Längsmittelschnitt entlang der Linie CC von Fig. 4;
- Fig. 6: einen Querschnitt entlang der Line AA von Fig. 4;
- Fig. 7: einen Querschnitt entlang der Linie BB von Fig. 4;
- Fig. 8: eine Schrägsicht eines Abschnitt der Spindel (wobei das Außengewinde der Spindel nicht dargestellt ist) und der auf der Spindel angeordneten Kugelgewindemutter;
- Fig. 9: einen Schnitt entsprechend Fig. 4 mit einer achsial kürzeren Kugelgewindemutter und eingelegten Zwischenringen.

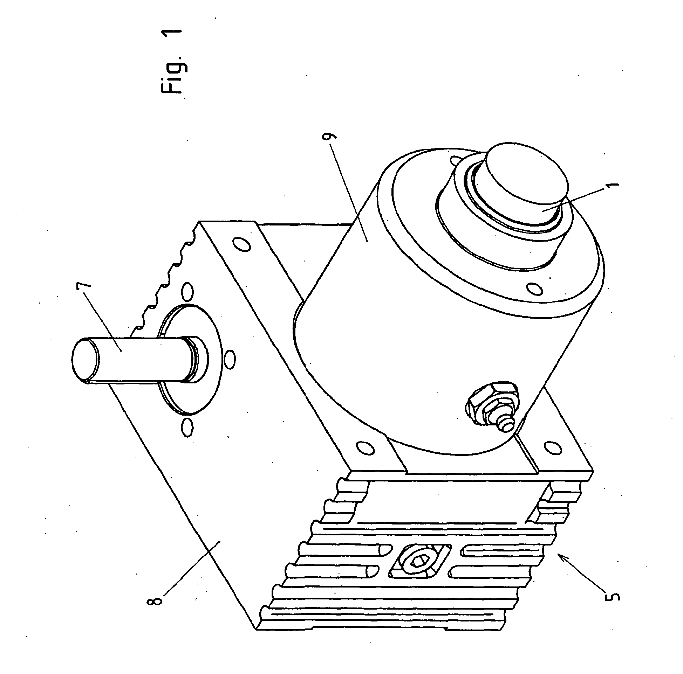

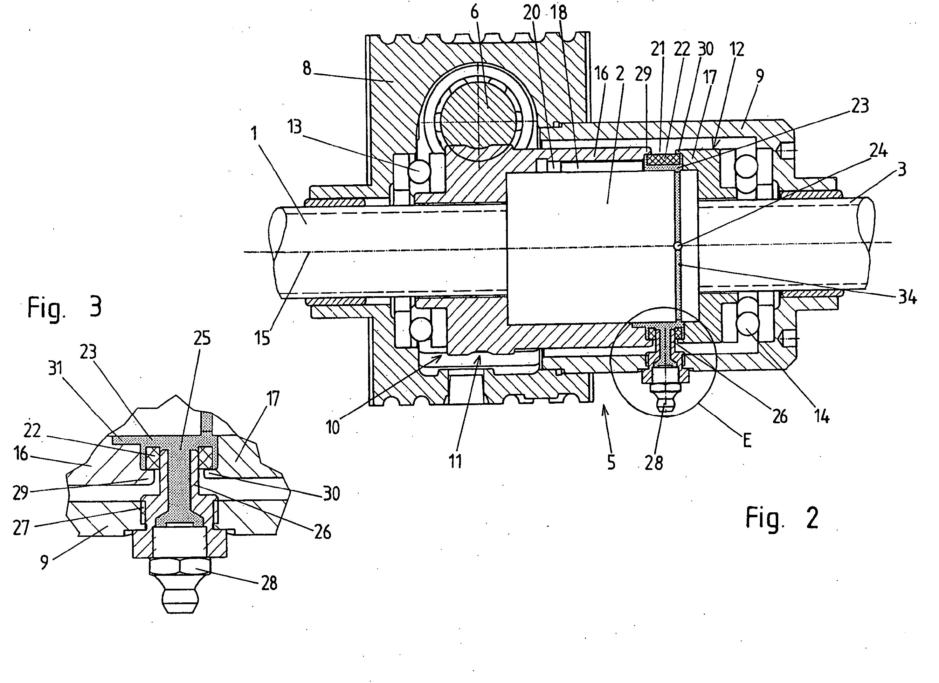

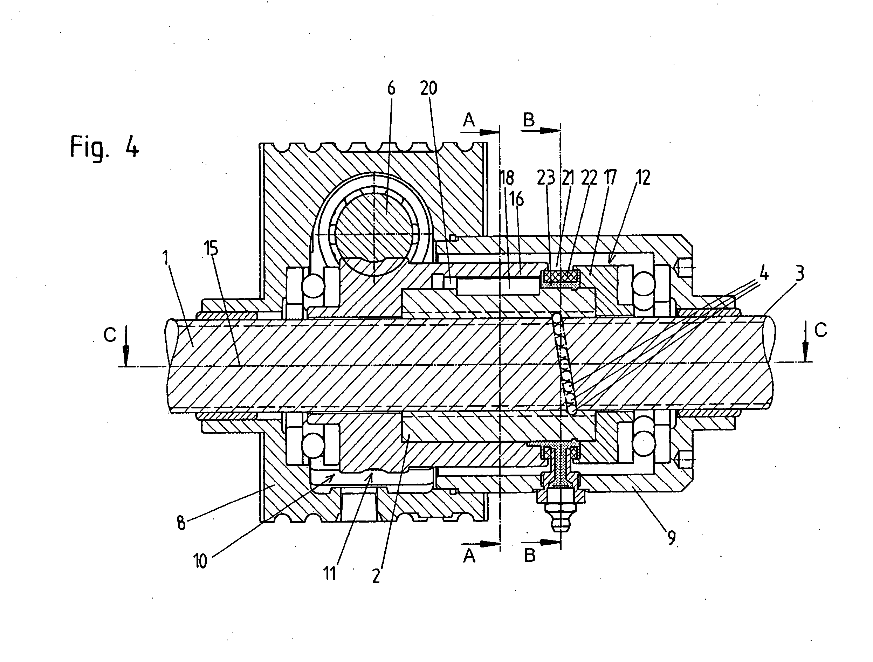

Das in den Fig. 1 bis 8 dargestellte Ausführungsbeispiel einer erfindungsgemäßen Stelleinrichtung (auch als Spindelhubgetriebe bzw. Spindelmuttergetriebe bezeichnet) umfasst eine in Richtung ihrer Längsachse verstellbare Spindel 1. Auf der Spindel 1 ist eine Kugelgewindemutter 2 angeordnet, wobei die Spindel 1 mit dem in den Figuren nur angedeuteten Kugelgewinde 3 und die Kugelgewindemutter 2, die mit dem Kugelgewinde 3 der Spindel 1 über zwischengelagerte Kugeln 4 zusammenwirkt, einen Kugeltrieb bilden. Derartige Kugeltriebe sind bekannt und seine Ausbildung muss daher im Rahmen dieser Schrift nicht im Detail erläutert werden.

Zum Antrieb dieses Kugelgewindetriebes ist in einem Gehäuse 5 ein Antriebsrad 6 drehbar gelagert, welches im gezeigten Ausführungsbeispiel als Schnecke ausgebildet ist. Am Antriebsrad 6 ist eine aus dem Gehäuse 5 herausragende Welle 7 angebracht, welche zur Drehung des Antriebsrades 6 bzw. achsialen Verstellung der Spindel 1 von einem nicht dargestellten Antriebsmotor drehbar ist.

Das Gehäuse 5 umfasst ein Gehäusebasisteil 8 und einen mit dem Gehäusebasisteil 8 verbundenen Gehäusedeckel 9, der beispielsweise in das Gehäusebasisteil 8 eingeschraubt ist. Das Gehäusebasisteil 8 und der Gehäusedeckel 9 schließen zusammen einen Innenraum des Gehäuses ein, in welchem das Antriebsrad 6 über nicht dargestellte Lager sowie eine die Kugelgewindemutter 2 umfassende Einheit 10 drehbar gelagert sind.

Die Einheit 10 umfasst ein vom Antriebsrad 6 angetriebenes Rad 11, welches im gezeigten Ausführungsbeispiel in Form eines Schneckenrades ausgebildet ist, welches in die vom Antriebsrad 6 gebildete Schnecke eingreift. Weiters umfasst die Einheit 10 ein Gegenstück 12. Die Kugelgewindemutter 2 ist zwischen dem angetriebenen Rad 11 und dem Gegenstück 12 angeordnet. Auf der von der Kugelgewindemutter 2 in achsialer Richtung gesehen abgewandten Seite des angetriebenen Rades 11 und des Gegenstücks 12 ist jeweils ein Lager 13, 14 vorhanden, über welche die Einheit 10 im Gehäuse 5 drehbar gelagert ist. Die Lager 13, 14 sind in Form von Achsiallagern ausgebildet.

Die Kugelgewindemutter 2, das angetriebene Rad 11 und das Gegenstück 12 sind somit im Gehäuse 5 konzentrisch zur Längsachse 15 der Spindel 1 drehbar angeordnet. Das angetriebene Rad 11 und das Gegenstück 12 umgeben hierbei die Spindel 1 mit Spiel.

Anstelle eines Schneckentriebs, bei dem das Antriebsrad 6 als Schnecke und das angetriebene Rad 11 als Schneckenrad ausgebildet ist, sind auch andere Zahneingriffe zwischen dem Antriebsrad 6 und dem angetriebenen Rad 11 denkbar und möglich, beispielsweise könnten diese Räder 6, 11 in Form von Kegelrädern ausgebildet sein.

Die Einheit 10 und die Lager 13, 14 werden durch die Anbringung des Gehäusedeckels 9 am Gehäusebasisteil 8 im Gehäuse fixiert.

Das angetriebene Rad 11 besitzt einen Hülsenfortsatz 16, der sich achsial in Richtung zum Gegenstück 12 erstreckt und die Kugelgewindemutter 2 ausgehend von ihrem auf der Seite des angetriebenen Rades 11 gelegenen Ende über eine Teil ihrer achsialen Erstreckung umgibt. Der Hülsenfortsatz 16 ist vorzugsweise einstückig mit dem angetriebenen Rad 11 ausgebildet. Denkbar und möglich wäre es auch, den Hülsenfortsatz 16 als separates Teil auszubilden und drehfest mit dem angetriebenen Rad 11 zu verbinden.

Das Gegenstück 12 weist einen achsial in Richtung zum angetriebenen Rad 11 sich erstreckenden Hülsenfortsatz 17 auf, der die Kugelgewindemutter 2 ausgehend von ihrem beim Gegenstück 12 gelegenen Ende über einen Teil ihrer achsialen Erstreckung umgibt. Der Hülsenfortsatz 17 ist vorzugsweise einstückig mit dem Gegenstück 12 ausgebildet. Denkbar und möglich wäre es auch, den Hülsenfortsatz 17 als separates Teil auszubilden und drehfest mit dem Gegenstück 12 zu verbinden.

Im gezeigten Ausführungsbeispiel ist der Hülsenfortsatz 16 wesentlich länger als der Hülsenfortsatz 17, vorzugsweise mehr als dreimal so lang.

Das angetriebene Rad 11 ist drehfest mit der Kugelgewindemutter 2 verbunden. Zu diesem Zweck ist im gezeigten Ausführungsbeispiel als Verdrehsicherung eine Passfeder 18 vorgesehen. Diese greift in eine in achsialer Richtung sich erstreckende nutförmige Ausnehmung 19 in der der äußeren Oberfläche der Kugelgewindemutter 2 und in eine in achsialer Richtung sich erstreckende nutförmige Ausnehmung 20 in der inneren Mantelfläche des Hülsenfortsatzes 16 ein.

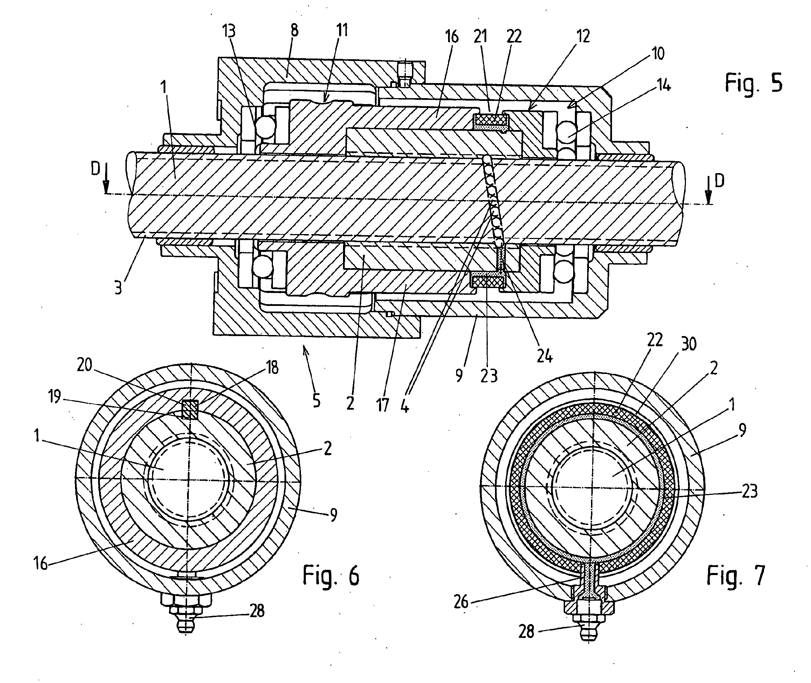

Zwischen den aufeinander zugerichteten Enden der Hülsenfortsätze 16, 17 des angetriebenen Rads 11 und des Gegenstücks 12 liegt ein Spalt 21 vor. Der Spalt 21 wird von einem ringförmigen Dichtteil 22 abgedichtet. Radial innerhalb des ringförmigen Dichtteils 22 und zwischen dem angetriebenen Rad 11 und dem Gegenstück 12 (genauer gesagt zwischen den stirnseitigen Enden der Hülsenfortsätze 16, 17 des angetriebenen Rads 11 und des Gegenstücks 12) wird eine Fettkammer 23 gebildet, wie dies am besten aus den Fig. 5 und 7 ersichtlich ist. Die Fettkammer 23 wird radial nach innen von der Kugelgewindemutter 2 begrenzt. In die Kugelgewindemutter 2 ist eine diese durchsetzende Bohrung 24 eingebracht, welche im gezeigten Ausführungsbeispiel radial ausgerichtet ist und im achsialen Bereich liegt, über welchen sich die Fettkammer 23 erstreckt. Durch diese Bohrung 24 kann in die Fettkammer 23 eingepresstes Schmiermittel, welches in den Figuren schematisch punktiert dargestellt ist, in den Bereich zwischen der Kugelgewindemutter 2 und der Spindel 1 gelangen, wobei eine Schmierung der Kugeln 4 erreicht wird.

Zur Einführung von Schmiermittel in die Fettkammer 23 weist das Dichtteil 22 eine Durchtrittsöffnung 25 auf, in die sich eine Zuführhülse 26 erstreckt. Die Zuführhülse 26 weist in einem Abschnitt, der einen gegenüber dem sich in die Durchtrittsöffnung 25 erstreckenden Abschnitt vergrößerten Durchmesser besitzt, ein Außengewinde 27 auf, über welches sie in eine Gewindebohrung des Gehäuses 5 eingeschraubt ist. In den Abschnitt der Zuführhülse 26, der den erweiterten Durchmesser aufweist, ist ein Schmiernippel 28 eingesetzt. Durch den Schmiernippel 28 und die Zuführhülse 26 kann ein Schmiermittel in die Fettkammer 23 eingepresst werden.

Statt einen Schmiernippel 28 anzubringen, könnte die Zuführhülse 26 auch an eine Zentralschmierung angeschlossen sein, von der Schmiermittel durch die Zuführhülse 26 in die Fettkammer 23 eingedrückt wird.

Das ringförmige Dichtteil 22 ist im gezeigten Ausführungsbeispiel ein elastomerer Dichtring. Dieser besitzt vorzugsweise einen rechteckigen Querschnitt, wobei sich die längere Rechteckseite in achsialer Richtung der Spindel 1 erstreckt. An den Enden der Hülsenfortsätze 16, 17 ist jeweils ein ringförmiger Dichtvorsprung 29, 30 angeordnet, der von einer Falz des jeweiligen Hülsenfortsatzes 16, 17 gebildet wird. Die Dichtvorsprünge 29, 30 übergreifen das Dichtteil 22 radial außen jeweils über einen randseitigen Abschnitts ihrer achsialen Erstreckung. Beim Einpressen von Schmiermittel in die Fettkammer 23 wird das Dichtteil 22 vom in der Fettkammer 23 aufgebauten Druck radial nach außen und gegen die Dichtvorsprünge 29, 30 gedrückt, wodurch eine zuverlässige Abdichtung der Fettkammer 23 beim Eindrücken von Schmiermittel erreicht wird.

Prinzipiell denkbar und möglich wäre es auch, für das Dichtteil 22 ein Metall- oder Kunststoffteil vorzusehen, an welchem Dichtlippen angebracht sind (beispielsweise anvulkanisiert sind), welche einerseits am angetriebenen Rad 11, andererseits am Gegenstück 12 zur Anlage kommen.

Im gezeigten Ausführungsbeispiel weist die Kugelgewindemutter 2 eine umlaufende Nut 34 auf, in welcher die die Kugelgewindemutter 2 durchsetzende Bohrung 24 angeordnet ist.

Wenn die Welle 7 angetrieben wird (von einem nicht dargestellten Antriebsmotor), so wird das Antriebsrad 6 und von diesem das angetriebene Rad 11 gedreht. Durch die drehfeste Verbindung des angetriebenen Rades 11 mit der Kugelgewindemutter 2 wird diese ebenfalls gedreht und verschiebt dadurch die Spindel 1 und somit eine an einem Ende der Spindel 1 angebrachte Last (nicht dargestellt in den Figuren) in Richtung der Längsachse 15 der Spindel 1. Zur Verhinderung der Drehung der Spindel 1 kann ihre Verbindung mit der zu verstellenden Last dienen. Weiters kann auch eine Verdrehsicherungseinrichtung für die Spindel 1 vorhanden sein. Solche Verdrehsicherungseinrichtungen sind bekannt und müssen daher an dieser Stelle nicht im Einzelnen beschrieben werden. Es sei lediglich erwähnt, dass zur Verdrehsicherung am von der Last abgelegenen Ende der Spindel 1 ein Klotz mit einem beispielsweise quadratischen Querschnitt angebracht sein kann, der in einem am Gehäuse 5 befestigten Vierkantrohr in Längsrichtung des Vierkantrohres verschiebbar, aber unverdrehbar gegenüber diesen geführt ist.

Durch die Anpressung des Gegenstücks 12 an die Kugelgewindemutter 2 und/oder durch die Passung bzw. Verpressung der Kugelgewindemutter 2 im Hülsenfortsatz 17 des Gegenstücks 12 dreht sich das Gegenstück 12 ebenfalls mit der Kugelgewindemutter 2 mit. Auch eine formschlüssige Verbindung zwischen diesen beiden Teilen könnte vorgesehen sein. Das Dichtteil 22 wird dagegen von der in dessen Durchtrittsöffnung 25 ragenden Zuführhülse 26 gegen eine Drehung blockiert, wobei das angetriebene Rad 11 und das Gegenstück 12 bei ihrer Drehung am Dichtteil 22 gleiten.

In den Gehäusebohrungen, durch welche die Spindel 1 in das Gehäuse 5 eintritt und aus diesem austritt, sind Führungsbuchsen 35 angebracht, beispielsweise eingepresst, die z.B. aus einer Bronzelegierung bestehen können. Im Normalbetrieb weist die Spindel 1 ein Spiel gegenüber diesen Führungsbuchsen 35 auf. Im Falle einer größeren auf die Spindel 1 seitlich einwirkenden Last, kommt es zur Anlage der Spindel 1 an die entsprechende Führungsbuchse 35, wobei die Spindel 1 von der Führungsbuchse 35 geführt wird (=Notführung). Solche Führungsbuchsen 35 sind bekannt.

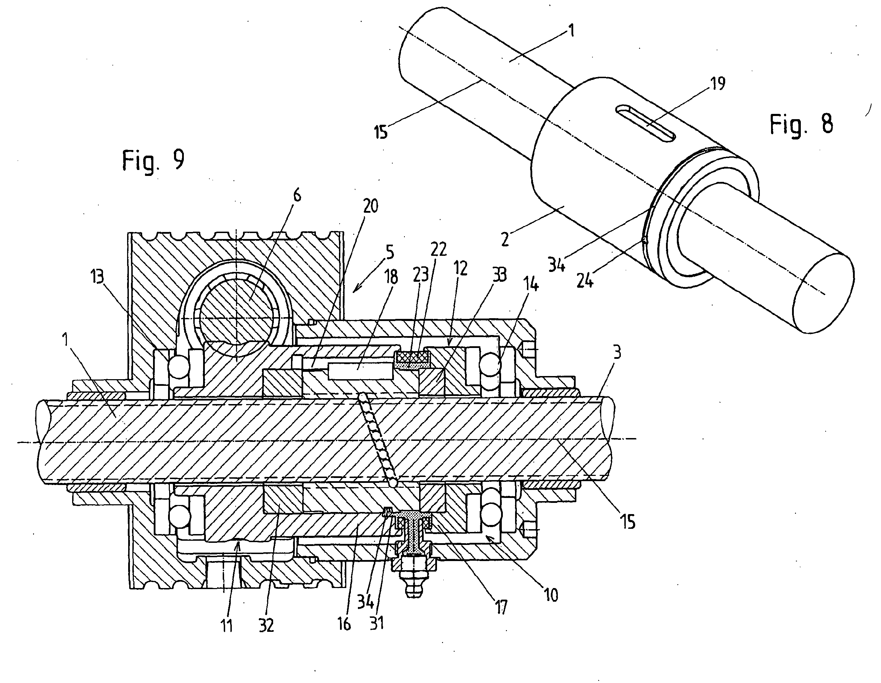

Für Kugelgewinde mit unterschiedlichen Steigungen werden unterschiedlich lange Kugelgewindemuttern 2 eingesetzt. In Fig. 9 ist eine im Vergleich zum Ausführungsbeispiel gemäß den Fig. 1 bis 8 wesentlich kürzere Kugelgewindemutter 2 auf der Spindel 1 angeordnet. Um die Längendifferenz auszugleichen, sind beidseitig der Kugelgewindemutter 2 Zwischenringe 32, 33 angeordnet. Es können dadurch alle übrigen Teile unverändert bleiben. Derselbe Aufbau und dieselben Teile können somit für Spindeln, die unterschiedliche Steigungen aufweisen, und für unterschiedlich lange Kugelgewindemuttern 2 eingesetzt werden. Auch ein nur auf einer Seite der Kugelgewindemutter 2 angeordneter Zwischenring 32, 33 kann für einen Längenausgleich eingesetzt werden. Der Zwischenring 32 und/oder 33 kann lose zwischen der Kugelgewindemutter und dem angetriebenen Rad 11 und/oder dem Gegenstück 12 eingelegt sein. Die Teile werden durch den mit dem Gehäusebasisteil verbundenen Gehäusedeckel 9 zusammengehalten.

Die Bohrung durch die Kugelgewindemutter 2, die in deren Innenraum führt, ist beim Ausführungsbeispiel gemäß Fig. 9 nicht mehr in demjenigen achsialen Bereich angeordnet, in dem die Fettkammer 23 liegt, sondern liegt achsial versetzt hierzu (in der Darstellung entsprechend Fig. 9 etwas links hiervon; die Bohrung selbst ist in Fig. 9 nicht sichtbar). Um das Schmiermittel zu dieser Bohrung in der Kugelgewindemutter 2 zu führen, ist im Fortsatz 16 eine von der Fettkammer 23 ausgehende achsiale Nut 31 ausgebildet, die in Fig. 9 auf der gegenüberliegenden Seite der Ausnehmung 20 für die Passfeder 18 dargestellt ist. In der äußeren Mantelfläche der Kugelgewindemutter 2 ist eine zumindest teilweise umlaufende Nut 34 eingebracht, die in einem zum achsialen Bereich, über welchen die Fettkammer 23 sich erstreckt, versetzten Bereich der Kugelgewindemutter 2 angeordnet ist. Die Bohrung durch den Mantel der Kugelgewindemutter 2 ist wiederum in der Nut 34 angeordnet. Die Nut 34 bildet einen die Kugelgewindemutter 2 zumindest teilweise umgebenden Hohlraum und das in die Fettkammer 23 eingepresstes Schmiermittel kann durch die mindestens eine achsiale Nut 31 des Hülsenfortsatzes 16 in die Nut 34 der Kugelgewindemutter 2 und von dort durch die Bohrung der Kugelgewindemutter ins Innere der Kugelgewindemutter 2 gelangen.

Der die Kugelgewindemutter zumindest teilweise umgebende Hohlraum könnte auch von einer Nut im Fortsatz 16 ausgebildet werden.

Im Ausführungsbeispiel gemäß den Fig. 1 bis 8 ist die achsiale Nut 31 ohne Funktion.

Unterschiedliche Modifikationen der gezeigten Ausführungsbeispiele der Erfindung sind denkbar und möglich, ohne den Bereich der Erfindung zu verlassen. So könnte beispielsweise nur das angetriebene Rad 11 oder nur das Gegenstück 12 einen Hülsenfortsatz 16 bzw. 17 aufweisen. Dieser würde sich soweit über die Kugelgewindemutter 2 erstrecken, dass sich ein Spalt 21 zwischen dem angetriebenen Rad 11 und dem Gegenstück 12 von einer geeigneten Breite ergibt, sodass er vom Dichtteil 22 abdichtbar ist. Das Dichtteil 22 könnte hierbei auch eine größere Breite aufweisen als in den Figuren dargestellt (insbesondere wenn es mit einem unelastischen Mittelteil ausgebildet ist). Das Dichtteil würde somit einerseits am Hülsenfortsatz 16 bzw. 17 entweder des angetriebenen Rades 11 oder des Gegenstücks 12 und andererseits am Basisteil des ohne einen solchen Hülsenfortsatz ausgebildeten anderen dieser beiden Teile 11, 12 anliegen.

### Legende zu den Hinweisziffern:

- 1: Spindel
- 2: Kugelgewindemutter
- 3: Kugelgewinde
- 4: Kugel
- 5: Gehäuse
- 6: Antriebsrad
- 7: Welle
- 8: Gehäusebasisteil
- 9: Gehäusedeckel
- 10: Einheit
- 11: angetriebenes Rad
- 12: Gegenstück
- 13: Lager
- 14: Lager
- 15: Längsachse
- 16: Hülsenfortsatz
- 17: Hülsenfortsatz
- 18: Passfeder
- 19: Ausnehmung
- 20: Ausnehmung
- 21: Spalt
- 22: Dichtteil
- 23: Fettkammer
- 24: Bohrung
- 25: Durchtrittsöffnung
- 26: Zuführhülse
- 27: Außengewinde
- 28: Schmiernippel
- 29: Dichtvorsprung
- 30: Dichtvorsprung
- 31: Nut
- 32: Zwischenring
- 33: Zwischenring
- 34: Nut
- 35: Führungsbuchse

## Patentansprüche

1. Stelleinrichtung zur Positionierung einer Last, mit einer Spindel (1), die ein Kugelgewinde (3) aufweist, und einer Kugelgewindemutter (2), die mit dem Kugelgewinde (3) der Spindel (1) über zwischengelagerte Kugeln (4) zusammenwirkt und die drehbar und achsial unverschiebbar in einem Gehäuse (5) angeordnet ist und durch deren Drehung die Spindel (1) achsial verstellbar ist, und mit einem drehbar im Gehäuse (5) gelagerten Antriebsrad (6), durch dessen Drehung die Kugelgewindemutter (2) drehbar ist, wobei die Kugelgewindemutter (2) zwischen einem vom Antriebsrad (6) angetriebenen Rad (11), welches drehfest mit der Kugelgewindemutter (2) verbunden ist und konzentrisch zur Längsachse (15) der Spindel (1) drehbar im Gehäuse (5) angeordnet ist, und einem Gegenstück (12) liegt, welches konzentrisch zur Längsachse (15) der Spindel (1) drehbar im Gehäuse (5) angeordnet ist, und wobei ein Hülsenfortsatz (16, 17) des angetriebenen Rades (11) und/oder des Gegenstücks (12), welcher einstückig mit dem angetriebenen Rad (11) bzw. Gegenstück (12) ausgebildet oder drehfest mit dem angetriebenen Rad (11) bzw. Gegenstück (12) verbunden ist, sich in achsialer Richtung der Spindel (1) erstreckt und die Kugelgewindemutter (2) umgibt, **dadurch gekennzeichnet, dass** ein Spalt (21) zwischen dem angetriebenen Rad (11) und dem Gegenstück (12) von einem ringförmigen Dichtteil (22) abgedichtet ist und radial innerhalb des ringförmigen Dichtteils (22) und zwischen dem angetriebenen Rad (11) und dem Gegenstück (12) eine Fettkammer (23) angeordnet ist, in die durch eine, vorzugsweise radial verlaufende, Durchtrittsöffnung (25) durch das Dichtteil (22) ein Schmiermittel einbringbar ist, welches durch eine die Kugelgewindemutter (2), vorzugsweise in radialer Richtung, durchsetzende Bohrung (24) in den Bereich zwischen der Kugelgewindemutter (2) und der Spindel (1) gelangt.

2. Stelleinrichtung nach Anspruch 1 **dadurch gekennzeichnet, dass** sowohl das angetriebenen Rad (11) als auch das Gegenstück (12) mit einem, vorzugsweise einstückig mit dem angetriebenen Rad (11) und dem Gegenstück (12) ausgebildeten, Hülsenfortsatz (16, 17) versehen sind und dass das Dichtteil (22) zwischen den aufeinander zugerichteten Enden der Hülsenfortsätze (16, 17) des angetriebenen Rades (11) und des Gegenstücks (12) angeordnet ist.

3. Stelleinrichtung nach Anspruch 2, **dadurch gekennzeichnet, dass** die Fettkammer (23) zwischen den aufeinander zugerichteten Enden der Hülsenfortsätze (16, 17) des angetriebenen Rads (11) und des Gegenstücks (12) angeordnet ist.

4. Stelleinrichtung nach einem der Ansprüche 1 bis 3, **dadurch gekennzeichnet, dass** das Dichtteil (22) ein aus einem Elastomer bestehender Dichtring ist

5. Stelleinrichtung nach einem der Ansprüche 1 bis 4, **dadurch gekennzeichnet, dass** das angetriebene Rad (11) und das Gegenstück (12) das Dichtteil (22) jeweils über einen randseitigen Abschnitt seiner achsialen Erstreckung radial außen übergreifende, ringförmige Dichtvorsprünge (29, 30) aufweisen.

6. Stelleinrichtung nach einem der Ansprüche 1 bis 5, **dadurch gekennzeichnet, dass** sich eine Zuführhülse (26) zum Zuführen des Schmiermittels in die Durchtrittsöffnung (25) des Dichtteils (22) erstreckt.

7. Stelleinrichtung nach Anspruch 6, **dadurch gekennzeichnet, dass** die Zuführhülse (26) sich durch eine Bohrung im Gehäuse (5) erstreckt, wobei sie vorzugsweise ein Außengewinde (27) aufweist und in ein Innengewinde dieser Bohrung eingeschraubt ist.

8. Stelleinrichtung nach Anspruch 6 oder Anspruch 7, **dadurch gekennzeichnet, dass** ein Schmiernippel (28) in die Zuführhülse (26) mündet.

9. Stelleinrichtung nach einem der Ansprüche 1 bis 8, **dadurch gekennzeichnet, dass** die Bohrung (24) durch die Kugelgewindemutter (2) in einem achsialen Bereich liegt, über welchen sich die Fettkammer (23) erstreckt.

10. Stelleinrichtung nach einem der Ansprüche 1 bis 8, **dadurch gekennzeichnet, dass** die Bohrung (24) durch die Kugelgewindemutter (2) in einem zum achsialen Bereich, über welchen sich die Fettkammer (23) erstreckt, achsial versetzten Bereich der Kugelgewindemutter (2) liegt und dass im achsialen Bereich dieser Bohrung (24) ein die Kugelgewindemutter (2) zumindest teilweise umgebender Hohlraum vorhanden ist, der vorzugsweise von einer Nut (34) in der äußeren Mantelfläche der Kugelgewindemutter (2) gebildet wird, und dass zwischen der Fettkammer (23) und dem Hohlraum eine achsial verlaufende Nut (31) verläuft, welche vorzugsweise in der inneren Mantelfläche des Hülsenfortsatzes (16, 17) des angetriebenen Rades (11) oder des Gegenstücks (12) angeordnet ist.

11. Stelleinrichtung nach einem der Ansprüche 1 bis 10, **dadurch gekennzeichnet, dass** auf der achsial von der Kugelgewindemutter (2) abgelegenen Seite des angetriebenen Rades (11) und des Gegenstücks (12) jeweils mindestens ein Lager (13, 14) zur verdrehbaren Lagerung des angetriebenen Rades (11), des Gegenstücks (12) und der zwischen ihnen angeordneten Kugelgewindemutter (2) angeordnet ist, wobei die Lager (13, 14) vorzugsweise in Form von Achsiallagern ausgebildet sind.

12. Stelleinrichtung nach einem der Ansprüche 1 bis 11, **dadurch gekennzeichnet, dass** die das angetriebene Rad (11), das Gegenstück (12) und die zwischen ihnen angeordnete Kugelgewindemutter (2) umfassende Einheit (10) unter Zwischenschaltung der Lager (13, 14) zwischen einem Gehäusebasisteil (8) und einem Gehäusedeckel (9) angeordnet ist.

13. Stelleinrichtung nach einem der Ansprüche 1 bis 12, **dadurch gekennzeichnet, dass** zur Verdrehsicherung der Kugelgewindemutter (2) gegenüber dem angetriebenen Rad (11) zwischen dem Hülsenfortsatz (16) des angetriebenen Rades (11) und der Kugelgewindemutter (2) eine in den Hülsenfortsatz (16) und in die Kugelgewindemutter (2) eingreifende Passfeder (18) angeordnet ist.

14. Stelleinrichtung nach einem der Ansprüche 1 bis 13, **dadurch gekennzeichnet, dass** das Antriebsrad (6) als Schnecke und das angetriebene Rad (11) als Schneckenrad ausgebildet ist.

15. Stelleinrichtung nach einem der Ansprüche 1 bis 14, **dadurch gekennzeichnet, dass** zur Anpassung an Gewindemuttern (2), welche eine kürzere Länge als eine maximal vorgesehene achsiale Länge aufweisen, zwischen der Kugelgewindemutter (2) und dem angetriebenen Rad (11) und/oder zwischen der Kugelgewindemutter (2) und dem Gegenstück (12) ein Zwischenring (32, 33) angeordnet ist.

## Claims

1. An actuating device for positioning a load, having a spindle (1), with a ball screw (3), and a ball screw nut (2) which cooperates with the ball screw (3) of the spindle (1) via interposed balls (4) and is arranged in a housing (5) so as to be rotatably and axially fixed and through the rotation of which the spindle (1) is axially displaceable, and having a drive wheel (6), rotatably mounted in the housing (5), through the rotation of which the ball screw nut (2) is rotatable, the ball screw nut (2) lying between a wheel (11) driven by the drive wheel (6), which wheel (11) is connected to the ball screw nut (2) in a rotationally-fixed manner and concentric with the longitudinal axis (15) of the spindle (1) is rotatably arranged in the housing (5), and a counterpart (12) which concentric with the longitudinal axis (15) of the spindle (1) is rotatably arranged in the housing (5), and a sleeve extension (16, 17) of the driven wheel (11) and/or of the counterpart (12), which sleeve extension is integral with the driven wheel (11) and/or counterpart (12) or is connected to the driven wheel (11) and/or counterpart (12) in a rotationally-fixed manner, extending in the axial direction of the spindle (1) and surrounding the ball screw nut (2), **characterised in that** a gap (21) between the driven wheel (11) and the counterpart (12) is sealed by an annular sealing part (22) and a grease chamber (23) is arranged radially within the annular sealing part (22) and between the driven wheel (11) and the counterpart (12), a lubricant being able to be introduced therein through a, preferably radially extending, through opening (25) through the sealing part (22), which lubricant reaches the region between the ball screw nut (2) and the spindle (1) through a bore (24) passing, preferably in a radial direction, through the ball screw nut (2).

2. An actuating device according to claim 1, **characterised in that** both the driven wheel (11) and the counterpart (12) are provided with a sleeve extension (16, 17) preferably integral with the driven wheel (11) and the counterpart (12), and **in that** the sealing part (22) is arranged between the facing ends of the sleeve extensions (16, 17) of the driven wheel (11) and of the counterpart (12).

3. An actuating device according to claim 2, **characterised in that** the grease chamber (23) is arranged between the facing ends of the sleeve extensions (16, 17) of the driven wheel (11) and of the counterpart (12).

4. An actuating device according to any one of claims 1 to 3, **characterised in that** the sealing part (22) is a sealing ring composed of an elastomer.

5. An actuating device according to any one of claims 1 to 4, **characterised in that** the driven wheel (11) and the counterpart (12) have annular sealing projections (29, 30) engaging in each case radially outwards over an edge portion of the axial extension of the sealing part (22).

6. An actuating device according to any one of claims 1 to 5, **characterised in that** a feed sleeve (26) to feed the lubricant extends into the through opening (25) of the sealing part (22).

7. An actuating device according to claim 6, **characterised in that** the feed sleeve (26) extends through a bore in the housing (5), it preferably having an external thread (27) and being screwed into an internal thread of this bore.

8. An actuating device according to claim 6 or claim 7, **characterised in that** a lubricating nipple (28) opens into the feed sleeve (26).

9. An actuating device according to any one of claims 1 to 8, **characterised in that** the bore (24) through the ball screw nut (2) lies in an axial region over which the grease chamber (23) extends.

10. An actuating device according to any one of claims 1 to 8, **characterised in that** the bore (24) through the ball screw nut (2) lies in a region of the ball screw nut (2) offset axially with regard to the axial region over which the grease chamber (23) extends, and **in that** a cavity at least partially surrounding the ball screw nut (2) is present in the axial region of this bore (24), which cavity is preferably formed by a channel (34) in the outer surface of the ball screw nut (2), and **in that** an axially extending channel (31), preferably arranged in the inner surface of the sleeve extension (16, 17) of the driven wheel (11) or of the counterpart (12), runs between the grease chamber (23) and the cavity.

11. An actuating device according to any one of claims 1 to 10, **characterised in that** on the side of the driven wheel (11) and the counterpart (12) axially remote from the ball screw nut (2) there is in each case arranged at least one bearing (13, 14) for rotatable mounting of the driven wheel (11), the counterpart (12) and the ball screw nut (2) arranged therebetween, the bearings (13, 14) preferably being in the form of thrust bearings.

12. An actuating device according to any one of claims 1 to 11, **characterised in that** the unit (10) comprising the driven wheel (11), the counterpart (12) and the ball screw nut (2) arranged therebetween is arranged between a housing base part (8) and a housing cover (9) with interposing of the bearings (13, 14)

13. An actuating device according to any one of claims 1 to 12, **characterised in that** to secure the ball screw nut (2) against rotation with respect to the driven wheel (11), a key (18) engaging into the sleeve extension (16) and into the ball screw nut (2) is arranged between the sleeve extension (16) of the driven wheel (11) and the ball screw nut (2).

14. An actuating device according to any one of claims 1 to 13, **characterised in that** the drive wheel (6) is in the form of a worm and the driven wheel (11) is in the form of a worm wheel.

15. An actuating device according to any one of claims 1 to 14, **characterised in that** for adaptation to threaded nuts (2) shorter in length than a maximum intended axial length, an intermediate ring (32, 33) is arranged between the ball screw nut (2) and the driven wheel (11) and/or between the ball screw nut (2) and the counterpart (12).

## Revendications

1. Installation d'actionnement pour positionner une charge comprenant une broche (1) ayant un filetage à billes (3) ainsi qu'un écrou fileté à billes (2), coopérant avec le filetage à billes (3) de la broche (1) par interposition de billes (4) et logé en rotation et de façon bloquée axialement dans un boîtier (5), la rotation de la broche (1) assurant le déplacement axial, ainsi qu'une roue d'entraînement (6) montée à rotation dans le boîtier (5) et dont la rotation fait tourner l'écrou à filetage à billes (2),
l'écrou à filetage à billes (2) est installé entre une roue (11) entraînée par la roue d'entraînement (6), en étant solidaire en rotation de l'écrou à filetage à billes (2) et concentrique à l'axe longitudinal (15) de la broche (1), de façon rotative dans le boîtier (5) filetage à billes (2),
une pièce complémentaire (12) installée concentriquement à l'axe longitudinal (15) de la broche (1), à rotation dans le boîtier (5) et
un prolongement en forme de manchon (16, 17) de la roue entraînée (11) et/ou de la pièce complémentaire (12) étant réalisé en une seule pièce avec la roue entraînée (11) ou la pièce complémentaire (12) ou solidairement en rotation avec la roue entraînée (11) ou la contre-pièce (12) en s'étendant dans la direction axiale de la broche (1) et entourant l'écrou fileté à billes (2), (1) et entourant
**caractérisée en ce que**
l'intervalle (21) entre la roue entraînée (11) et la pièce opposée (12) est rendu étanche par une pièce d'étanchéité (22) de forme annulaire et, radialement à l'intérieur de la pièce d'étanchéité (22) de forme annulaire et entre la roue entraînée (11) et la pièce complémentaire (12) on a une chambre à graisse (23) dans laquelle on introduit un agent lubrifiant, de préférence par une ouverture de passage (25) dans la pièce d'étanchéité (22), cette ouverture étant de préférence dirigée radialement, l'agent lubrifiant arrivant à travers l'écrou fileté à rotule (2) de préférence dans la direction radiale, par un perçage traversant (24) dans la zone comprise entre l'écrou à filetage à billes (2) et la broche (1).

2. Installation d'actionnement selon la revendication 1,
**caractérisée en ce qu'**
à la fois la roue entraînée (11) et la pièce complémentaire (12) sont munies d'un prolongement en forme de manchon (16, 17), de préférence en une seule pièce avec la roue entraînée (11) et la pièce complémentaire (12) et
la pièce d'étanchéité (22) est installée entre les extrémités en regard des prolongements en forme de manchon (16, 17) de la roue entraînée (11) et de la pièce complémentaire (12).

3. Installation d'actionnement selon la revendication 2,
**caractérisée en ce que**
la chambre à graisse (23) se trouve entre les extrémités en regard des prolongements en forme de manchon (16, 17) de la roue entraînée (11) et de la pièce complémentaire (12),

4. Installation d'actionnement selon l'une des revendications 1 à 3,
**caractérisée en ce que**
la pièce d'étanchéité (22) est un joint d'étanchéité en élastomère.

5. Installation d'actionnement selon l'une des revendications 1 à 4,
**caractérisée en ce que**
la roue entraînée (11) et la pièce complémentaire (12) ont chacune sur un segment du côté du bord de leur extension axiale, des saillies d'étanchéité (29, 30) de forme annulaire qui débordent radialement vers l'extérieur.

6. Installation d'actionnement selon l'une des revendications 1 à 5,
**caractérisée par**
un manchon d'alimentation (26) pour assurer l'alimentation en agent lubrifiant dans l'orifice de passage (25) de la pièce d'étanchéité (22).

7. Installation d'actionnement selon la revendication 6,
**caractérisée en ce que**
le manchon d'alimentation (26) traverse un perçage du boîtier (5) et comporte de préférence un filetage extérieur (27) en étant vissé dans un filetage intérieur du perçage.

8. Installation d'actionnement selon la revendication 6 ou la revendication 7,
**caractérisée par**
un nipple de graisseur (28) débouchant dans le manchon d'alimentation (26).

9. Installation d'actionnement selon l'une des revendications 1 à 8,
**caractérisée en ce que**
le perçage (24) traverse l'écrou fileté à billes (2) dans une zone axiale dans laquelle s'étend la chambre à graisse (23).

10. Installation d'actionnement selon l'une des revendications 1 à 8,
**caractérisée en ce que**
le perçage (24) traverse l'écrou fileté à billes (2) dans une zone décalée axialement par rapport à la zone axiale dans laquelle s'étend la chambre à graisse (23) de l'écrou à filetage à billes (2) et
dans la zone axiale de ce perçage (24), une cavité entoure au moins en partie l'écrou fileté à billes (2), cette cavité étant formée de préférence par une rainure (34) dans la surface enveloppe extérieure de l'écrou fileté sphérique (2) et entre la chambre à graisse (23) et la cavité, une rainure axiale (31) est réalisée de préférence dans la surface enveloppe intérieure du prolongement de manchon (16, 17) de la roue entraînée (11) ou de la pièce complémentaire (12).

11. Installation d'actionnement selon l'une des revendications 1 à 10,
**caractérisée en ce que**
sur le côté de la roue entraînée (11), tournée axialement vers l'écrou fileté à billes (2) et la pièce complémentaire (12), elle comporte chaque fois au moins un palier (13, 14) pour recevoir à rotation la roue entraînée (11), la pièce complémentaire (12) et l'écrou à filetage à billes (2) installé entre ces pièces, les paliers (13, 14) étant réalisés de préférence sous la forme de paliers axiaux.

12. Installation d'actionnement selon l'une des revendications 1 à 11,
**caractérisée en ce que**
l'ensemble (10) comprenant la roue entraînée (11), la pièce complémentaire (12) et l'écrou fileté à billes (2) installé entre ces deux pièces, se trouve avec interposition des paliers (13, 14) entre une partie de base de boîtier (8) et un couvercle de boîtier (9).

13. Installation d'actionnement selon l'une des revendications 1 à 12,
**caractérisée en ce que** pour le blocage en rotation de l'écrou fileté à billes (2) par rapport à la roue entraînée (11), entre le prolongement en forme de manchon (16) de la roue entraînée (11) et l'écrou fileté (2), un ressort clavette (18) pénètre dans le prolongement en forme de manchon (16) et dans l'écrou fileté (18).

14. Installation d'actionnement selon l'une des revendications 1 à 13,
**caractérisée en ce que**
la roue d'entraînement (6) est une vis et la roue entraînée (11) est une roue à vis.

15. Installation d'actionnement selon l'une des revendications 1 à 14,
**caractérisée par**
par un anneau intermédiaire (32, 33) pour s'adapter aux écrous filetés (2) de longueur inférieure à la longueur axiale maximale prévue, entre l'écrou à filetage à billes (2) et la roue entraînée (11) et/ou entre l'écrou fileté à billes (2) et la pièce complémentaire (12).
